# EUROPEAN PATENT APPLICATION

(11) **EP 2 991 338 A1**
(43) Date of publication of application: **02.03.2016**
(21) Application number: 15180783.1
(22) Date of filing: 12.08.2015
(51) Int. Cl.: H04N 5/232, H04N 5/225

(54) **METHOD AND DEVICE FOR SWITCHING CAMERAS**

(30) Priority: 15.08.2014 CN 201410401892
(71) Applicant: Xiaomi Inc., Beijing 100085 (CN)
(72) Inventor: SHI, Xinming, 100085 Haidian District (CN); DI, Hao, 100085 Haidian District (CN); ZHANG, Peng, 100085 Haidian District (CN)
(74) Representative: Sadler, Peter Frederick

(57) **Abstract**

The present disclosure relates to a method and a device for switching cameras, and belongs to the field of electronic technology. The method includes: acquiring an operation instruction for turning on a first camera; monitoring an operation instruction acquired by a terminal screen of a terminal; when it is monitored that the terminal screen acquires a touch operation, determining whether the touch operation is matched with a set touch operation; and when the touch operation is matched with the set touch operation, performing switching between turning on the first camera and turning on a second camera. The device includes: an acquisition module, a monitoring module, a first determining module and a switching module. According to the present disclosure, when a user wants to switch cameras, the user performs a touch operation matched with the set touch operation on the terminal screen to trigger the terminal to switch the cameras; when the terminal monitors that the terminal screen acquires the touch operation matched with the set touch operation, the terminal will perform switching between turning on the first camera and turning on a second camera; the operation process is simple and thereby the switching efficiency is improved.

## Description

### TECHNICAL FIELD

The present disclosure relates to the field of electronic technology, and more particularly, to a method and a device for switching cameras.

### BACKGROUND

A terminal is generally equipped with a front camera and a rear camera at present. A user may use the front camera for taking images of themselves (known as a "selfie") and use the rear camera for photographing scenery and the like. In this way, the user needs to switch between the cameras of the terminal frequently. For example, when the user uses the front camera for a selfie, and wants to use the rear camera to photograph scenery, the user needs to switch the current camera from the front camera to the rear camera at the moment.

In related arts, there is provided a method for switching cameras, which may be as follows: when a terminal performs photographing through a camera, the terminal displays a switching button in a photographing interface. When the user wants to switch the camera, the user holds the terminal by one hand and taps the switching button by the other hand so as to submit a switching command to the terminal; the terminal receives the switching command submitted by the user, closes the camera, opens another camera at the same time and performs photographing through the another camera.

Generally, the photographing interface may include a camera preview interface or area that reproduces on the terminal screen the visual output of the currently selected camera so that the user can see what it is they will be taking an image or video of.

In the process of achieving the present disclosure, it is found that the related arts at least have the following defects:

When the user switches the cameras, the user needs to hold the terminal by one hand and tap the switching button on the screen by the other hand. The operation process is cumbersome and thereby causes low efficiency.

### SUMMARY

The invention is defined in the independent claims to which reference is now directed. Preferred features are set out in the dependent claims.

In order to overcome the problems in the related arts, the present disclosure provides a method and a device for switching cameras.

According to a first aspect of embodiments of the present disclosure, there is provided a method for switching cameras of a mobile terminal, including:
acquiring an operation instruction for turning on a first camera;
monitoring an operation instruction acquired by a terminal screen of the terminal;
when it is monitored that the terminal screen acquires a touch operation, determining whether the touch operation is matched with a set touch operation; and
when the touch operation is matched with the set touch operation, performing switching between turning on / activating the first camera and turning on / activating a second camera.

Optionally, determining whether the touch operation is matched with a set touch operation may occur when it is monitored that the terminal screen acquires a touch operation anywhere within the preview area on the terminal screen that reproduces the output of the currently selected camera. Optionally this determining may be performed when it is monitored that the terminal screen acquires a touch operation anywhere on the terminal screen, including the preview area.

Optionally, the determining whether the touch operation is matched with the set touch operation includes:
acquiring an operation instruction parameter of an operation on the screen, the operation instruction parameter including one of a touch duration and a touch track or a combination thereof;
determining whether the operation instruction parameter satisfies a preset condition; and
when it is determined that the operation instruction parameter satisfies the preset condition, determining that the touch operation is matched with the set touch operation.

Optionally, the determining whether the touch operation is matched with the set touch operation includes:
acquiring an operation type of the touch operation;
determining whether the operation type is matched with a preset type; and
when it is determined that the operation type is matched with the preset type, determining that the touch operation is matched with the set touch operation.

Optionally, the method further includes:
when the acquired touch operation is a long press operation, determining whether an operation parameter of the acquired long press operation conforms to a preset parameter, wherein the operation parameter of the long press operation is time for a finger long-pressing the terminal screen; and/or
when the acquired touch operation is a swipe operation, determining whether an operation parameter of the acquired swipe operation conforms to a preset parameter, wherein the operation parameter of the swipe operation is a distance for a finger swiping on the terminal screen; and/or
when the acquired touch operation is a tap operation, determining whether an operation parameter of the acquired tap operation conforms to a preset parameter, wherein the operation parameter of the tap operation is a tap frequency of a finger on the terminal screen.

Optionally, when it is determined that time for the long press operation reaches set time, the long press operation is determined as an operation that satisfies switching parameters; and/or
when it is determined that the swipe distance reaches a preset distance, the swipe operation is determined as an operation that satisfies switching parameters; and/or
when it is determined that the tap frequency reaches a preset frequency, the tap operation is determined as an operation that satisfies switching parameters.

Optionally, the determining whether the operation instruction parameter satisfies the preset condition includes:
when the acquired touch operation is a swipe operation, acquiring the operation instruction parameter as a swipe direction of a finger on the terminal screen;
determining whether the swipe direction is identical to a preset direction; and
when it is determined that the swipe direction is identical to the preset direction, determining that the operation instruction parameter of the swipe operation satisfies the preset condition.

Optionally, the swipe operation includes an upward swipe operation and a downward swipe operation;
when the downward swipe operation from top to bottom is acquired, turning on the first camera is switched into turning on the second camera; or when the upward swipe operation from bottom to top is acquired, turning on the second camera is switched into turning on the first camera.

According to a second aspect of the present disclosure, there is provided a device for switching cameras, including:
an acquisition module configured to acquire an operation instruction for turning on a first camera;
a monitoring module configured to monitor an operation instruction acquired by a terminal screen of a terminal;
a first determining configured to, when it is monitored that the terminal screen acquires a touch operation, determine whether the touch operation is matched with a set touch operation; and
a switching module configured to, when the touch operation is matched with the set touch operation, perform switching between turning on the first camera and turning on a second camera.

Optionally, determining whether the touch operation is matched with a set touch operation may occur when it is monitored that the terminal screen acquires a touch operation anywhere within the preview area on the terminal screen that reproduces the output of the currently selected camera. Optionally this determining may be performed when it is monitored that the terminal screen acquires a touch operation anywhere on the terminal screen, including the preview area.

Optionally, the first determining module includes:
a first acquisition unit configured to acquire an operation instruction parameter of an operation on the screen, the operation instruction parameter including one of a touch duration and a touch track or a combination thereof;
a first determining unit configured to determine whether the operation instruction parameter satisfies a preset condition; and
a first determination unit configured to, when it is determined that the operation instruction parameter satisfies the preset condition, determine that the touch operation is matched with the set touch operation.

Optionally, the first determining module includes:
a second acquisition unit configured to acquire an operation type of the touch operation;
a second determining unit configured to determine whether the operation type is matched with a preset type; and
a second determination unit configured to, when it is determined that the operation type is matched with the preset type, determine that the touch operation is matched with the set touch operation.

Optionally, the device further includes:
a second determining module configured to, when the acquired touch operation is a long press operation, determine whether an operation parameter of the acquired long press operation conforms to a preset parameter, wherein the operation parameter of the long press operation is time for a finger long-pressing the terminal screen; and/or
a second determining module configured to, when the acquired touch operation is a swipe operation, determine whether an operation parameter of the acquired swipe operation conforms to a preset parameter, wherein the operation parameter of the swipe operation is a distance for a finger swiping on the terminal screen; and/or
a second determining module configured to, when the acquired touch operation is a tap operation, determine whether an operation parameter of the acquired tap operation conforms to a preset parameter, wherein the operation parameter of the tap operation is a tap frequency of a finger on the terminal screen.

Optionally, the device further includes:
a determination module configured to, when it is determined that time for the long press operation reaches set time, determine the long press operation as an operation that satisfies switching parameters; and/or
a determination module configured to, when it is determined that the swipe distance reaches a preset distance, determine the swipe operation as an operation that satisfies switching parameters; and/or
a determination module configured to, when it is determined that the tap frequency reaches a preset frequency, determine the tap operation as an operation that satisfies switching parameters.

Optionally, the first determining module includes:
an acquisition subunit configured to, when the acquired touch operation is a swipe operation, acquire the operation instruction parameter as a swipe direction of a finger on the terminal screen;
a determining subunit configured to determine whether the swipe direction is identical to a preset direction; and
a determination subunit configured to, when it is determined that the swipe direction is identical to the preset direction, determine that the operation instruction parameter of the swipe operation satisfies the preset condition.

Optionally, the swipe operation includes and upward swipe operation and a downward swipe operation;
when the downward swipe operation from top to bottom is acquired, the switching module switches turning on the first camera into turning on the second camera; or
when the upward swipe operation from bottom to top is acquired, the switching module switches turning on the second camera into turning on the first camera.

According to a third aspect of embodiments of the present disclosure, there is provided a device for switching cameras, including:
a processor; and
a memory for storing instructions executable by the processor;
wherein the processor is configured to:
acquire an operation instruction for turning on a first camera;
monitor an operation instruction acquired by a terminal screen of a terminal;
when it is monitored that the terminal screen acquires a touch operation, determine whether the touch operation is matched with a set touch operation; and
when the touch operation is matched with the set touch operation, perform switching between turning on the first camera and turning on a second camera.

Optionally, determining whether the touch operation is matched with a set touch operation may occur when it is monitored that the terminal screen acquires a touch operation anywhere within the preview area on the terminal screen that reproduces the output of the currently selected camera. Optionally this determining may be performed when it is monitored that the terminal screen acquires a touch operation anywhere on the terminal screen, including the preview area.

The present invention also provides a computer program, which when executing on a processor of a device, performs the above method.

Some advantageous effects of the present disclosure may include: when a user wants to switch cameras, the user performs a touch operation matched with the set touch operation on the terminal screen to trigger the terminal to switch the cameras; when the terminal monitors that the terminal screen acquires the touch operation matched with the set touch operation, the terminal will perform switching between turning on the first camera and turning on a second camera; the operation process is simple and thereby the switching efficiency is improved. In particular where the user can perform a touch operation anywhere within the preview area on the terminal screen that reproduces the output of the currently selected camera to trigger the terminal to switch cameras, the user can provide the touch operation anywhere within a comparatively large area, rather than having to press a particular button, which makes the camera switching operation easier for one handed operation whilst holding the terminal.

### BRIEF DESCRIPTION OF THE DRAWINGS

The accompanying drawings, which constitute a part of this specification, provide further understanding for the invention, and are not restrictive of the invention. In the accompanying drawings:
Fig. 1 is a flow chart showing a method for switching cameras according to a first exemplary embodiment.
Fig. 2 is a flow chart showing a method for method for switching cameras according to a second exemplary embodiment.
Fig. 3 is a block diagram showing a device for switching cameras according to a third exemplary embodiment.
Fig. 4 is a block diagram showing a terminal according to a fourth exemplary embodiment.

### DETAILED DESCRIPTION

To make the objects, technical solutions and advantages of the present disclosure more clear, the present disclosure will be further explained in details with reference to the embodiments and accompanying drawings hereinafter. The exemplary embodiments and explanations thereof of the present disclosure are only for explanation of the present disclosure, but not for limiting the present disclosure.

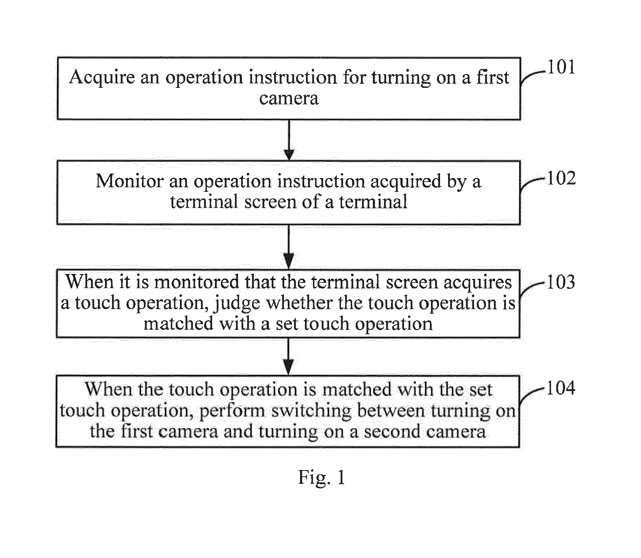

Fig. 1 is a flow chart showing a method for switching cameras according to an exemplary embodiment. As shown in Fig. 1, the method for switching cameras is used in a terminal and the method includes the following steps.

In step S101, an operation instruction for turning on a first camera is acquired.

In step S102, an operation instruction acquired by a terminal screen of a terminal is monitored.

In step S103, when it is monitored that the terminal screen acquires a touch operation, whether the touch operation is matched with a set touch operation is determined.

In step S104, when the touch operation is matched with the set touch operation, switching between turning on the first camera and turning on a second camera is performed.

Optionally, determining whether the touch operation is matched with the set touch operation includes:
acquiring an operation instruction parameter of an operation on the screen, the operation instruction parameter including one of a touch duration and a touch track or a combination thereof;
determining whether the operation instruction parameter satisfies a preset condition; and
when it is determined that the operation instruction parameter satisfies the preset condition, determining that the touch operation is matched with the set touch operation.

Optionally, determining whether the touch operation is matched with the set touch operation includes:
acquiring an operation type of the touch operation;
determining whether the operation type is matched with a preset type; and
when it is determined that the operation type is matched with the preset type, determining that the touch operation is matched with the set touch operation.

Optionally, the method further includes:
when the acquired touch operation is a long press operation, determining whether an operation parameter of the acquired long press operation conforms to a preset parameter, wherein the operation parameter of the long press operation is time for a finger long-pressing the terminal screen; and/or
when the acquired touch operation is a swipe operation, determining whether an operation parameter of the acquired swipe operation conforms to a preset parameter, wherein the operation parameter of the swipe operation is a distance for a finger swiping on the terminal screen; and/or
when the acquired touch operation is a tap operation, determining whether an operation parameter of the acquired tap operation conforms to a preset parameter, wherein the operation parameter of the tap operation is a tap frequency of a finger repeatedly tapping on the terminal screen. For example, as the user repeatedly taps their finger on the screen and the tap frequency is determined as the length of time between two successive taps, or the tap frequency is determined as the average time between successive taps over at least a predetermined number of taps.

Optionally, when it is determined that time for the long press operation reaches set time, the long press operation is determined as an operation that satisfies switching parameters; and/or
when it is determined that the swipe distance reaches a preset distance, the swipe operation is determined as an operation that satisfies switching parameters; and/or
when it is determined that the tap frequency reaches a preset frequency, the tap operation is determined as an operation that satisfies switching parameters.

Optionally, determining whether the operation instruction parameter satisfies the preset condition includes:
when the acquired touch operation is a swipe operation, acquiring the operation instruction parameter as a swipe direction of a finger on the terminal screen;
determining whether the swipe direction is identical to a preset direction; and
when it is determined that the swipe direction is identical to the preset direction, determining that the operation instruction parameter of the swipe operation satisfies a preset condition.

Optionally, the swipe operation includes an upward swipe operation and a downward swipe operation;
when the downward swipe operation from top to bottom is acquired, turning on the first camera is switched into turning on the second camera; or when the upward swipe operation from bottom to top is acquired, turning on the second camera is switched into turning on the first camera.

The technical solutions provided by the embodiments of the present disclosure may include the following advantageous effects: when a user wants to switch cameras, the user performs a touch operation matched with the set touch operation on the terminal screen to trigger the terminal to switch the cameras; when the terminal monitors that the terminal screen acquires the touch operation matched with the set touch operation, the terminal will perform switching between turning on the first camera and turning on a second camera; the operation process is simple and thereby the switching efficiency is improved.

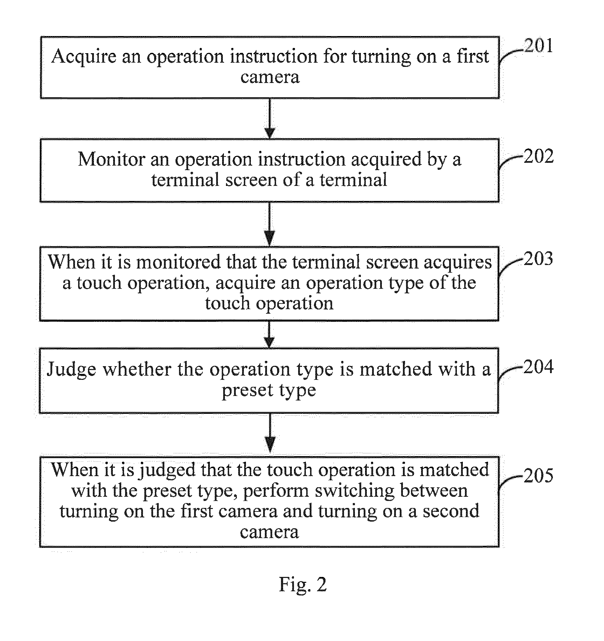

Fig. 2 is a flow chart showing a method for switching cameras according to an exemplary embodiment. As shown in Fig. 2, the method for switching cameras is used in a terminal and the method includes the following steps.

In step S201, an operation instruction for turning on a first camera is acquired.

The terminal is equipped with two cameras including a first camera and a second camera. The operation instruction for turning on the first camera is acquired and the first camera is turned on. At this time, photographing is performed through the first camera of the terminal.

When a user wants to switch turning on the first camera into turning on the second camera, the user may perform a touch operation anywhere at least within the preview area on the terminal screen that reproduces the output of the currently selected camera and matched with the set touch operation on a terminal screen to trigger the terminal to switch the cameras: the user holds the terminal by one hand, and meanwhile, the user may stick out one finger of the hand such as the thumb and the like, to perform the touch operation matched with the set touch operation on the terminal screen.

The touch operation matched with the set touch operation may be a touch operation matched with a preset type, a touch operation matched with the preset type and having an operation instruction parameter satisfying a preset condition, a swipe operation having a preset swipe direction or a swipe operation having a preset swipe direction and a swipe distance conforming to a preset parameter.

Before this step, the user may input an operation type to the terminal. The terminal receives the operation type input by the user, and sets the operation type input by the user as the preset type, thus it is possible to set the preset type according to the preference of the user and thereby to satisfy user's requirements.

Before this step, the user may also input an operation instruction parameter to the terminal. The terminal receives the operation instruction parameter input by the user and sets the operation instruction parameter input by the user as the preset parameter.

Before this step, the user may also input a swipe direction to the terminal. The terminal receives the swipe direction input by the user and sets the swipe direction input by the user as the preset direction.

The terminal may be any terminal equipped with a first camera and a second camera, for example a mobile phone or a tablet personal computer equipped with a first camera and a second camera, and the like. The first camera may either be a front camera or a rear camera.

For instance, explanation will be made with an example where the terminal is a mobile phone and the first camera is a front camera. The mobile phone acquires an operation instruction for turning on the front camera, and turns on the front camera. When the user wants to switch turning on the front camera into turning on the rear camera, the user holds the terminal by one hand, and meanwhile, the user may stick out the thumb on this hand to perform a touch operation matched with the set touch operation on the screen of the mobile phone.

In step S202, an operation instruction acquired by the terminal screen of the terminal is monitored.

The user may perform a touch operation on the terminal screen to submit an operation instruction to the terminal screen. The terminal screen of the terminal acquires the operation instruction submitted by the user. The operation instruction may be a touch operation instruction and the like. The terminal monitors the terminal screen thereof in real time. When it is monitored that the terminal screen acquires a touch operation, step S203 is performed.

In step S203, when it is monitored that the terminal screen acquires the touch operation, an operation type of the touch operation is acquired.

When the user wants to switch turning on the first camera into turning on the second camera, if the preset type is a long press type, then a finger of the user may touch on the terminal screen and long press the terminal screen. The terminal screen of the terminal acquires the long press operation. When the terminal monitors that the terminal screen acquires the long press operation, the operation type of the long press operation is acquired as a long press operation type. If the preset type is a swipe type, then a finger of the user may swipe on the terminal screen; and the terminal screen of the terminal acquires the swipe operation. When the terminal monitors that the terminal screen acquires the swipe operation, the operation type of the swipe operation is acquired as a swipe operation type. If the preset type is a tap type, then a finger of the user may tap on the terminal screen. The terminal screen of the terminal acquires the tap operation. When the terminal monitors that the terminal screen acquires the tap operation, the operation type of the tap operation is acquired as a tap operation type.

For example, when the user wants to switch turning on the front camera into turning on the rear camera, the user may swipe right by 2 cm on the screen of the mobile phone by one of his fingers, and the screen of the mobile phone acquires the swipe operation of the user on the screen. When the mobile phone monitors that the screen of the mobile phone acquires the swipe operation, the operation type of the swipe operation is acquired as the swipe operation type.

In step S204, whether the operation type is matched with a preset type is determined. When it is determined that the operation type is matched with the preset type, the touch operation is determined to be matched with the set touch operation, and then step S205 is performed; otherwise, the flowchart ends.

The preset type may be a long press operation type, a swipe operation type or a tap operation type, and the like.

For example, it is assumed that the preset type is the long press operation type, and the step may include:
determining whether the operation type of the touch operation is a long press operation type; when it is determined that the operation type of the touch operation is the long press operation type, determining that the operation type of the touch operation is matched with the preset type; otherwise, determining that the operation type of the touch operation is not matched with the preset type.

Optionally, the operation of determining that the operation type of the touch operation is matched with the preset type may include: acquiring the time for the user's finger long pressing the terminal screen, and determining whether the time for the user's finger long pressing the terminal screen conforms to a preset parameter, wherein the preset parameter may be set time and the like; i.e., determining whether the time for the user's finger long pressing the terminal screen reaches the set time; when it is determined that the time for the user's finger long pressing the terminal screen reaches the set time, determining the long press operation as an operation that satisfies switching parameters, i.e. determining that the operation type of the touch operation is matched with the set type; otherwise, determining that the operation type of the touch operation is not matched with the preset type.

As another example, it is assumed that the preset type is the swipe operation type, and the step may include:

determining whether the operation type of the touch operation is a swipe operation type; when it is determined that the operation type of the touch operation is the swipe operation type, determining that the operation type of the touch operation is matched with the preset type; otherwise, determining that the operation type of the touch operation is not matched with the preset type.

Optionally, the operation of determining that the operation type of the touch operation is matched with the preset type may include: acquiring a distance for user's finger swiping on the terminal screen, and determining whether the distance for user's finger swiping on the terminal screen conforms to a preset parameter, wherein the preset parameter may be a preset distance and the like; i.e., determining whether the distance for user's finger swiping on the terminal screen reaches the preset distance; when it is determined that the distance for user's finger swiping on the terminal screen reaches the preset distance, determining the swipe operation as an operation that satisfies switching parameters, i.e. determining that the operation type of the touch operation is matched with the set type; otherwise, determining that the operation type of the touch operation is not matched with the preset type.

Or, the step of determining whether the touch operation is matched with the set touch operation may include:
acquiring an operation instruction parameter of an operation on the screen, the operation instruction parameter including one of a touch duration and a touch track or a combination thereof; determining whether the operation instruction parameter satisfies a preset condition; and when it is determined that the operation instruction parameter satisfies the preset condition, determining that the touch operation is matched with the set touch operation.

Optionally, the operation of determining whether the operation instruction parameter satisfies the preset condition may include:
when the acquired touch operation is a swipe operation, acquiring the operation instruction parameter as a swipe direction of a finger on the terminal screen; determining whether the swipe direction is identical to a preset direction; and when it is determined that the swipe direction is identical to the preset direction, determining that the operation instruction parameter of the swipe operation satisfies a preset condition; otherwise, determining that the touch operation is not matched with the set touch operation.

Or, the operation of determining whether the operation instruction parameter satisfies the preset condition may include: acquiring the swipe distance and the swipe direction of user's finger on the terminal screen; determining whether the swipe distance for the user's finger on the terminal screen exceeds a preset distance and whether the swipe direction is identical to the preset direction; if the swipe distance of user's finger on the terminal screen exceeds the preset distance and the swipe direction is identical to the preset direction, determining that the operation instruction parameter of the swipe operation satisfies the preset condition; otherwise, determining that the touch operation is not matched with the set touch operation.

As another example, it is assumed that the preset type is a tap operation type, and the step may include:
determining whether the operation type of the touch operation is a tap operation type; when it is determined that the operation type of the touch operation is the tap operation type, determining that the operation type of the touch operation is matched with the preset type; otherwise, determining that the operation type of the touch operation is not matched with the preset type.

Optionally, the operation of determining that the operation type of the touch operation is matched with the preset type may include: acquiring a frequency for user's finger tapping the terminal screen, and determining whether the frequency for user's finger tapping the terminal screen conforms to a preset parameter, wherein the preset parameter may be a preset frequency; i.e. determining whether the frequency for user's finger tapping the terminal screen reaches the preset frequency; when it is determined that the frequency for user's finger tapping the terminal screen reaches the preset frequency, determining the tap operation as an operation that satisfies switching parameters, i.e. determining that the operation type of the touch operation is matched with the set type; otherwise, determining that the operation type of the touch operation is not matched with the preset type.

The operation of acquiring the swipe distance of user's finger on the terminal screen may include:
acquiring positions of a plurality of points included in a swipe track of user's finger on the terminal screen; calculating distances between every two adjacent points among the plurality of points; and taking the sum of the distances between every two adjacent points as the swipe distance of user's on the terminal screen.

The operation of acquiring the swipe direction of user's the finger on the terminal screen may include:
acquiring the swipe track, the start point position and the end point position of user's finger on the terminal screen; and determining the swipe track from the start point position to the end point position as the swipe direction of user's finger on the terminal screen.

The set time may be set and altered according to requirements, for example, the set time is 4s, and the like. The preset distance may be set and altered according to the size of the terminal screen, for example, the preset distance is 1 cm and the like. The preset frequency may be set and altered according to requirements, for example, the preset frequency is once per second and the like. The preset direction may be set and altered according to the user's requirements, for example, the preset direction may be an upward direction, a downward direction, a leftward direction or a rightward direction, and the like.

For example, the preset direction is a rightward direction, and the preset distance is 1 cm and then the mobile phone acquires that the swipe direction of user's finger on the screen of the mobile phone is rightward. Thus, the swipe direction of user's finger on the terminal screen is identical to the preset direction. The mobile phone acquires that the swipe distance of user's the finger on the terminal screen is 2 cm which exceeds the preset distance. Thus, the mobile phone determines that the touch operation is matched with the set touch operation.

In step S205, switching between turning on the first camera and turning on a second camera is performed.

When the touch operation is matched with the set touch operation, the first camera is turned off, and the second camera is turned on, and photographing is performed through the second camera.

When the swipe operation in step S203 is a downward swipe operation from top to bottom, turning on the first camera is switched into turning on the second camera in the present step.

Optionally, if the swipe operation in step S203 is an upward swipe operation from bottom to top, turning on the second camera is switched into turning on the first camera in the present step.

For example, the swipe operation satisfies the preset condition, and turning on the front camera is switched into turning on the rear camera.

The technical solutions provided by the embodiments of the present disclosure may include the following advantageous effects: when a user wants to switch cameras, the user performs a touch operation matched with the set touch operation on the terminal screen to trigger the terminal to switch the cameras; when the terminal monitors that the terminal screen acquires the touch operation matched with the set touch operation, the terminal will perform switching between turning on the first camera and turning on a second camera; the operation process is simple and thereby the switching efficiency is improved.

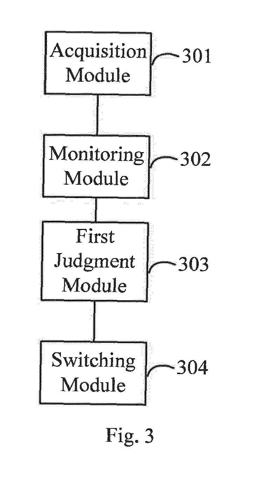

Fig. 3 is a block diagram showing a device for switching cameras according to an exemplary embodiment. Referring to Fig. 3, the device includes: an acquisition module 301, a monitoring module 302, a first determining module 303 and a switching module 304.

The acquisition module 301 is configured to acquire an operation instruction for turning on a first camera.

The monitoring module 302 is configured to monitor an operation instruction acquired by a terminal screen of a terminal.

The first determining 303 is configured to, when it is monitored that the terminal screen acquires a touch operation, determine whether the touch operation is matched with a set touch operation.

The switching module 304 is configured to, when the touch operation is matched with the set touch operation, perform switching between turning on the first camera and turning on a second camera.

Optionally, the first determining module 303 includes:
a first acquisition unit configured to acquire an operation instruction parameter of an operation on the screen, the operation instruction parameter including one of a touch duration and a touch track or a combination thereof;
a first determining unit configured to determine whether the operation instruction parameter satisfies a preset condition; and
a first determination unit configured to, when it is determined that the operation instruction parameter satisfies the preset condition, determine that the touch operation is matched with the set touch operation.

Optionally, the first determining module 303 includes:
a second acquisition unit configured to acquire an operation type of the touch operation;
a second determining unit configured to determine whether the operation type is matched with a preset type; and
a second determination unit configured to, when it is determined that the operation type is matched with the preset type, determine that the touch operation is matched with the set touch operation.

Optionally, the device further includes:
a second determining module configured to, when the acquired touch operation is a long press operation, determine whether an operation parameter of the acquired long press operation conforms to a preset parameter, wherein the operation parameter of the long press operation is time for a finger long-pressing the terminal screen; and/or
a second determining module configured to, when the acquired touch operation is a swipe operation, determine whether an operation parameter of the acquired swipe operation conforms to a preset parameter, wherein the operation parameter of the swipe operation is a distance for a finger swiping on the terminal screen; and/or
a second determining module configured to, when the acquired touch operation is a tap operation, determine whether an operation parameter of the acquired tap operation conforms to a preset parameter, wherein the operation parameter of the tap operation is a tap frequency of a finger repeatedly tapping on the terminal screen. For example, as the user repeatedly taps their finger on the screen and the tap frequency is determined as the length of time between two successive taps, or the tap frequency is determined as the average time between successive taps over at least a predetermined number of taps.

Optionally, the device further includes:
a determination module configured to, when it is determined that time for the long press operation reaches set time, determine the long press operation as an operation that satisfies switching parameters; and/or
a determination module configured to, when it is determined that the swipe distance reaches a preset distance, determine the swipe operation as an operation that satisfies switching parameters; and/or
a determination module configured to, when it is determined that the tap frequency reaches a preset frequency, determine the tap operation as an operation that satisfies switching parameters.

Optionally, the first determining unit includes:
an acquisition subunit configured to, when the acquired touch operation is a swipe operation, acquire the operation instruction parameter as a swipe direction of a finger on the terminal screen;
a determining subunit configured to determine whether the swipe direction is identical to a preset direction; and
a determination subunit configured to, when it is determined that the swipe direction is identical to the preset direction, determine that the operation instruction parameter of the swipe operation satisfies the preset condition.

Optionally, the swipe operation includes and upward swipe operation and a downward swipe operation;
when the downward swipe operation from top to bottom is acquired, the switching module 304 switches turning on the first camera into turning on the second camera; or,
when the upward swipe operation from bottom to top is acquired, the switching module 304 switches turning on the second camera into turning on the first camera.

The technical solutions provided by the embodiments of the present disclosure may include the following advantageous effects: when a user wants to switch cameras, the user performs a touch operation matched with the set touch operation on the terminal screen to trigger the terminal to switch the cameras; when the terminal monitors that the terminal screen acquires the touch operation matched with the set touch operation, the terminal will perform switching between turning on the first camera and turning on a second camera; the operation process is simple and thereby the switching efficiency is improved.

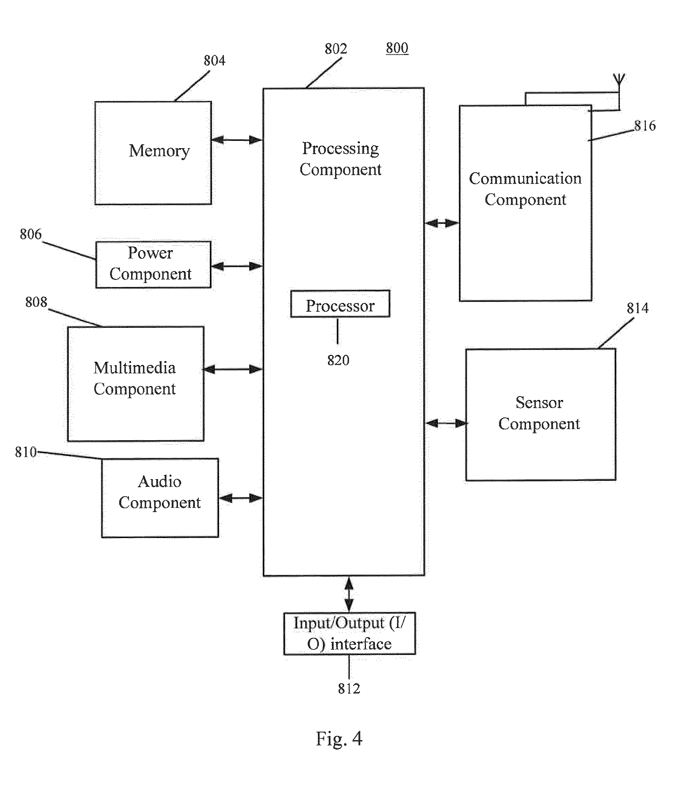

Fig. 4 is a block diagram showing a terminal 800 according to an exemplary embodiment. For example, the terminal 800 may be a mobile phone, a computer, a digital broadcast terminal, a messaging device, a gaming console, a tablet, a medical device, exercise equipment, a personal digital assistant, and the like.

Referring to Fig. 4, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the terminal 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the terminal 800. Examples of such data include instructions for any applications or methods operated on the terminal 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 may include a power management system, one or more power sources, and any other components associated with the generation, management, and distribution of power in the terminal 800.

The multimedia component 808 includes a screen providing an output interface between the terminal 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the terminal 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the terminal 800 is in an operation mode, such as a call mode, a recording mode, and a voice recognition mode. The received audio signal may be further stored in the memory 804 or transmitted via the communication component 816.In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal 800. For instance, the sensor component 814 may detect an open/closed status of the terminal 800, relative positioning of components, e.g., the display and the keypad, of the terminal 800, a change in position of the terminal 800 or a component of the terminal 800, a presence or absence of user contact with the terminal 800, an orientation or an acceleration/deceleration of the terminal 800, and a change in temperature of the terminal 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the terminal 800 and other devices. The terminal 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the terminal 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the terminal 800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium includes instructions, when executed by a processor of a mobile terminal, enables the mobile terminal to perform a method for switching cameras, wherein the method includes:
acquiring an operation instruction for turning on a first camera;
monitoring an operation instruction acquired by a terminal screen of a terminal;
when it is monitored that the terminal screen acquires a touch operation, determining whether the touch operation is matched with a set touch operation; and
when the touch operation is matched with the set touch operation, switching turning on the first camera into turning on a second camera.

In an embodiment, the determining whether the touch operation is matched with the set touch operation includes:
acquiring an operation instruction parameter of an operation on the screen, the operation instruction parameter including one of a touch duration and a touch track or a combination thereof;
determining whether the operation instruction parameter satisfies a preset condition; and
when it is determined that the operation instruction parameter satisfies the preset condition, determining that the touch operation is matched with the set touch operation.

In an embodiment, the determining whether the touch operation is matched with the set touch operation includes:
acquiring an operation type of the touch operation;
determining whether the operation type is matched with a preset type; and
when it is determined that the operation type is matched with the preset type, determining that the touch operation is matched with the set touch operation.

In an embodiment, the method includes:
when the acquired touch operation is a long press operation, determining whether an operation parameter of the acquired long press operation conforms to a preset parameter, wherein the operation parameter of the long press operation is time for a finger long-pressing the terminal screen; and/or
when the acquired touch operation is a swipe operation, determining whether an operation parameter of the acquired swipe operation conforms to a preset parameter, wherein the operation parameter of the swipe operation is a distance for a finger swiping on the terminal screen; and/or
when the acquired touch operation is a tap operation, determining whether an operation parameter of the acquired tap operation conforms to a preset parameter, wherein the operation parameter of the tap operation is a tap frequency of a finger repeatedly tapping on the terminal screen. For example, as the user repeatedly taps their finger on the screen and the tap frequency is determined as the length of time between two successive taps, or the tap frequency is determined as the average time between successive taps over at least a predetermined number of taps.

In an embodiment, when it is determined that time for the long press operation reaches set time, the long press operation is determined as an operation that satisfies switching parameters; and/or
when it is determined that the swipe distance reaches a preset distance, the swipe operation is determined as an operation that satisfies switching parameters; and/or
when it is determined that the tap frequency reaches a preset frequency, the tap operation is determined as an operation that satisfies switching parameters.

In an embodiment, the determining whether the operation instruction parameter satisfies the preset condition comprises:
when the acquired touch operation is a swipe operation, acquiring the operation instruction parameter as a swipe direction of a finger on the terminal screen;
determining whether the swipe direction is identical to a preset direction; and
when it is determined that the swipe direction is identical to the preset direction, determining that the operation instruction parameter of the swipe operation satisfies the preset condition.

In an embodiment, the swipe operation includes an upward swipe operation and a downward swipe operation;
when the downward swipe operation from top to bottom is acquired, turning on the first camera is switched into turning on the second camera; or when the upward swipe operation from bottom to top is acquired, turning on the second camera is switched into turning on the first camera.

The technical solutions provided by the embodiments of the present disclosure may include the following advantageous effects: when a user wants to switch cameras, the user performs a touch operation matched with the set touch operation on the terminal screen to trigger the terminal to switch the cameras; when the terminal monitors that the terminal screen acquires the touch operation matched with the set touch operation, the terminal will switch turning on the first camera into turning on the second camera; the operation process is simple and thereby the switching efficiency is improved.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for switching between cameras of a mobile terminal that comprises at least a first and second camera and a touch screen wherein the method comprises, at the mobile terminal:
acquiring (101) an operation instruction for turning on the first camera;
monitoring (102) an operation instruction acquired by the terminal touch screen;
when it is monitored that the terminal touch screen acquires a touch operation anywhere within the preview area on the terminal screen that reproduces the output of the currently selected camera, determining (103) whether the touch operation is matched with a set touch operation; and
when the touch operation is matched with the set touch operation, performing switching (104) between turning on the first camera and turning on a second camera.

2. The method according to claim 1, wherein the determining whether the touch operation is matched with the set touch operation comprises:
acquiring an operation instruction parameter of an operation on the touch screen, the operation instruction parameter comprising one of a touch duration and a touch track or a combination thereof;
determining whether the operation instruction parameter satisfies a preset condition; and
when it is determined that the operation instruction parameter satisfies the preset condition, determining that the touch operation is matched with the set touch operation.

3. The method according to claim 1, wherein the determining whether the touch operation is matched with the set touch operation comprises:
acquiring an operation type of the touch operation;
determining whether the operation type is matched with a preset type; and
when it is determined that the operation type is matched with the preset type, determining that the touch operation is matched with the set touch operation.

4. The method according to claim 3, wherein the method further comprises:
when the acquired touch operation is a long press operation, determining whether an operation parameter of the acquired long press operation conforms to a preset parameter, wherein the operation parameter of the long press operation is a time for which a finger presses on the terminal screen; and/or
when the acquired touch operation is a swipe operation, determining whether an operation parameter of the acquired swipe operation conforms to a preset parameter, wherein the operation parameter of the swipe operation is a distance over which a finger swipes on the terminal screen; and/or
when the acquired touch operation is a tap operation, determining whether an operation parameter of the acquired tap operation conforms to a preset parameter, wherein the operation parameter of the tap operation is a tap frequency of a finger tapping on the terminal screen.

5. The method according to claim 4, wherein when it is determined that time for the long press operation reaches a set time, the long press operation is determined as an operation that satisfies switching parameters; and/or
when it is determined that the swipe distance reaches a preset distance, the swipe operation is determined as an operation that satisfies switching parameters; and/or
when it is determined that the tap frequency reaches a preset frequency, the tap operation is determined as an operation that satisfies switching parameters.

6. The method according to claim 2, wherein the determining whether the operation instruction parameter satisfies the preset condition comprises:
when the acquired touch operation is a swipe operation, acquiring the operation instruction parameter as a swipe direction of a finger on the terminal screen;
determining whether the swipe direction is identical to a preset direction; and
when it is determined that the swipe direction is identical to the preset direction, determining that the operation instruction parameter of the swipe operation satisfies the preset condition.

7. The method according to claim 6, wherein the swipe operation comprises an upward swipe operation and a downward swipe operation;
when the downward swipe operation from top to bottom is acquired, turning on the first camera is switched into turning on the second camera; or when the upward swipe operation from bottom to top is acquired, turning on the second camera is switched into turning on the first camera.

8. A mobile terminal (800) comprising at least a first and second camera and a touch screen, wherein the device further comprises:
an acquisition module (301) configured to acquire an operation instruction for turning on the first camera;
a monitoring module (302) configured to monitor an operation instruction acquired by the touch screen;
a first determining module (303) configured to, when it is monitored that the touch screen acquires a touch operation anywhere within the preview area on the terminal screen that reproduces the output of the currently selected camera, determine whether the touch operation is matched with a set touch operation; and
a switching module (304) configured to, when the touch operation is matched with the set touch operation, perform switching between turning on the first camera and turning on the second camera.

9. The terminal according to claim 8, wherein the first determining module comprises:
a first acquisition unit configured to acquire an operation instruction parameter of an operation on the screen, the operation instruction parameter comprising one of a touch duration and a touch track or a combination thereof;
a first determining unit configured to determine whether the operation instruction parameter satisfies a preset condition; and
a first determination unit configured to, when it is determined that the operation instruction parameter satisfies the preset condition, determine that the touch operation is matched with the set touch operation.

10. The device according to claim 8, wherein the first determining module comprises:
a second acquisition unit configured to acquire an operation type of the touch operation;
a second determining unit configured to determine whether the operation type is matched with a preset type; and
a second determination unit configured to, when it is determined that the operation type is matched with the preset type, determine that the touch operation is matched with the set touch operation.

11. The device according to claim 10, wherein the device further comprises:
a second determining module configured to, when the acquired touch operation is a long press operation, determine whether an operation parameter of the acquired long press operation conforms to a preset parameter, wherein the operation parameter of the long press operation is a time for which a finger presses on the terminal screen; and/or
a second determining module configured to, when the acquired touch operation is a swipe operation, determine whether an operation parameter of the acquired swipe operation conforms to a preset parameter, wherein the operation parameter of the swipe operation is a distance over which a finger swipes on the terminal screen; and/or
a second determining module configured to, when the acquired touch operation is a tap operation, determine whether an operation parameter of the acquired tap operation conforms to a preset parameter, wherein the operation parameter of the tap operation is a tap frequency of a finger tapping on the terminal screen.

12. The device according to claim 11, wherein the device further comprises
a determination module configured to, when it is determined that the time for the long press operation reaches a set time, determine the long press operation as an operation that satisfies switching parameters; and/or
a determination module configured to, when it is determined that the swipe distance reaches a preset distance, determine the swipe operation as an operation that satisfies switching parameters; and/or
a determination module configured to, when it is determined that the tap frequency reaches a preset frequency, determine the tap operation as an operation that satisfies switching parameters.

13. The device according to claim 9, wherein the first determining unit comprises:
an acquisition subunit configured to, when the acquired touch operation is a swipe operation, acquire the operation instruction parameter as a swipe direction of a finger on the terminal screen;
a determining subunit configured to determine whether the swipe direction is identical to a preset direction; and
a determination subunit configured to, when it is determined that the swipe direction is identical to the preset direction, determine that the operation instruction parameter of the swipe operation satisfies the preset condition;
wherein the swipe operation comprises an upward swipe operation and downward swipe operation;
when the downward swipe operation from top to bottom is acquired, the switching module switches turning on the first camera into turning on the second camera; or
when the upward swipe operation from bottom to top is acquired, the switching module switches turning on the second camera into turning on the first camera.

14. A mobile terminal (800) comprising at least a first and second camera and a touch screen, wherein the terminal further comprises:
a processor (820); and
a memory (804) for storing instructions executable by the processor;
wherein the processor is configured to perform the method of any of claims 1 to 7.

15. A computer program, which when executed on a processor of a mobile terminal, causes it to perform the method according to any one of claims 1 to 7.
